# EUROPEAN PATENT SPECIFICATION

(11) **EP 4 719 949 B1**
(45) Date of publication and mention of the grant of the patent: **23.09.2026**
(21) Application number: 23727626.6
(22) Date of filing: 25.05.2023
(51) Int. Cl.: B66B 1/24

(54) **CONTROL OF ELEVATOR SYSTEM**
STEUERUNG EINES AUFZUGSSYSTEMS
COMMANDE D'UN SYSTÈME D'ASCENSEUR

(43) Date of publication of application: 08.04.2026
(73) Proprietor: KONE Corporation, 00330 Helsinki (FI)
(72) Inventor: KEMPPAINEN, Mika, 00330 Helsinki (FI); BELOV, Mika, 00330 Helsinki (FI)
(74) Representative: Berggren Oy
(86) International application number: PCT/FI2023/050293
(87) International publication number: WO 2024/240983

(56) References cited:
- CN-A- 114 180 420
- KR-A- 20210 055 413

## Description

### TECHNICAL FIELD

The invention concerns in general the technical field of elevators. More particularly, the invention concerns controlling of an elevator system.

### BACKGROUND

Buildings are mostly developed for human users. The same applies with respect to systems implemented in the buildings, such as elevators. However, due to huge development in computing power there are more and more initiatives to utilize robots in serving humans in various contexts. This, in turn, increases a complexity to operate the systems in the buildings as well as to enable a smooth cooperation of the humans and the mobile robots in the buildings.

An example of the challenges in the cooperation of the humans and the mobile robots is the use of elevators. There are developed solutions in which the co-travel of the human passengers and the mobile robots are controlled in a sophisticated way in order to maintain efficiency of the elevator system especially from the viewpoint of human passengers. In addition to the transport with the elevator there are also further aspects to consider in the cooperation, such as how the mobile robots survive in travelling in crowded corridors. These kinds of aspects become relevant especially with respect to elevator systems having so-called transfer floors used for transferring passengers from one elevator to another. Examples of methods and systems for managing a travel of a mobile robot in a building equipped with an elevator are known from KR 2021 0055413 A and CN 114 180 420 A.

Therefore, there is a need to introduce novel approaches to solve the above described situations.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a control system, a computer program and a computer-readable medium for managing a travel of a mobile robot in a building equipped with an elevator system.

The objects of the invention are reached by a method, a control system, a computer program and a computer-readable medium as defined by the respective independent claims.

According to a first aspect, a method for managing a travel of a mobile robot in a building is provided wherein the building is equipped with an elevator system comprising at least one elevator arranged to serve a different section of the building than at least one other elevator and wherein the at least one elevator and the at least one other elevator are both accessible from at least one transfer floor, the method, performed by a control system, comprises:
receiving data indicative of a state of the at least one transfer floor,
receiving a service request for providing an elevator service to the mobile robot,
setting, in response to a detection that the state of the at least one transfer floor does not correspond to a reference state, another floor to the at least one transfer floor as a new transfer floor for at least the mobile robot,
generating a control signal to the elevator system to request an allowance of the at least one elevator and the at least one other elevator to travel to the new transfer floor, and
generating a control signal to the mobile robot, the control signal comprising data at least indicative of a travel path of the mobile robot in the elevator utilizing the new transfer floor.

The data indicative of the state of the at least one transfer floor may be received from at least one of the following: a sensor system arranged to monitor the at least one transfer floor, an elevator system, a robot system, a cloud computing system arranged to receive input from at least one user.

The data indicative of the state of the at least one transfer floor may be descriptive of an occupancy of the at least one transfer floor.

The setting of the other floor as the new transfer floor may be performed based on one of the following: a pre-defined order of floors in the building, a monitoring a number of pre-defined candidate floors for the new transfer floor. For example, the setting of the other floor as the new transfer floor based on the monitoring the number of the pre-defined candidate floors for the new transfer floor may be performed by:
monitoring occupancies of the pre-defined candidate floors, and
selecting the candidate floor having the lowest occupancy among the candidate floors to be set as the new transfer floor.

The method may further comprise:
receiving a confirmation indicative of that the at least one elevator and the at least one other elevator are allowed to travel to the new transfer floor, and
generating, to the elevator system, a signal comprising data at least indicative of a travel path of the mobile robot in the elevator for controlling the elevator system to provide service to the mobile robot with respect to the new transfer floor.

In the method it may also be performed:
continuing detecting if the state of the at least one transfer floor does not correspond to the reference state during the mobile robot is served by the elevator system,
determining, in response to the detection that the state of the at least one transfer floor does not correspond to the reference state during the mobile robot is served by the elevator system, if the elevator serving the mobile robot is controllable to stop at the new transfer floor, and
generating, in response to an outcome of the determination that the elevator serving the mobile robot is controllable to stop at the new transfer floor, a control signal to the elevator system to stop at the new transfer floor.

According to a second aspect, a control system for managing a travel of a mobile robot in a building is provided wherein the building is equipped with an elevator system comprising at least one elevator arranged to serve a different section of the building than at least one other elevator and wherein the at least one elevator and the at least one other elevator are both accessible from at least one transfer floor, the control system is configured to:
receive data indicative of a state of the at least one transfer floor,
receive a service request for providing an elevator service to the mobile robot,
set, in response to a detection that the state of the at least one transfer floor does not correspond to a reference state, another floor to the at least one transfer floor as a new transfer floor for at least the mobile robot,
generate a control signal to the elevator system to request an allowance of the at least one elevator and the at least one other elevator to travel to the new transfer floor, and
generate a control signal to the mobile robot, the control signal comprising data at least indicative of a travel path of the mobile robot in the elevator utilizing the new transfer floor.

The control system may be configured to receive the data indicative of the state of the at least one transfer floor from at least one of the following: a sensor system arranged to monitor the at least one transfer floor, an elevator system, a robot system, a cloud computing system arranged to receive input from at least one user.

The data indicative of the state of the at least one transfer floor may be descriptive of an occupancy of the at least one transfer floor.

Moreover, the control system may be configured to perform the setting of the other floor as the new transfer floor based on one of the following: a pre-defined order of floors in the building, a monitoring a number of pre-defined candidate floors for the new transfer floor. For example, the control system may be configured to perform the setting of the other floor as the new transfer floor based on the monitoring the number of the pre-defined candidate floors for the new transfer floor by:
monitoring occupancies of the pre-defined candidate floors, and
selecting the candidate floor having the lowest occupancy among the candidate floors to be set as the new transfer floor.

The control system may further be configured to:
receive a confirmation indicative of that the at least one elevator and the at least one other elevator are allowed to travel to the new transfer floor, and
generate, to the elevator system, a signal comprising data at least indicative of a travel path of the mobile robot in the elevator for control the elevator system to provide service to the mobile robot with respect to the new transfer floor.

The control system may further be configured to:
continue detecting if the state of the at least one transfer floor does not correspond to the reference state during the mobile robot is served by the elevator system,
determine, in response to the detection that the state of the at least one transfer floor does not correspond to the reference state during the mobile robot is served by the elevator system, if the elevator serving the mobile robot is controllable to stop at the new transfer floor, and
generate, in response to an outcome of the determination that the elevator serving the mobile robot is controllable to stop at the new transfer floor, a control signal to the elevator system to stop at the new transfer floor.

According to a third aspect a computer program is provided, the computer comprising instructions which, when the program is executed by a control system according to the second aspect as defined above to carry out the method according to the first aspect as defined above.

According to a fourth aspect, a computer-readable medium having stored thereon the computer program according to the third aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features.

The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an environment into which the present invention is implemented to according to an example.
Figure 2 illustrates schematically a method according to an example.
Figure 3 illustrates schematically a control system according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

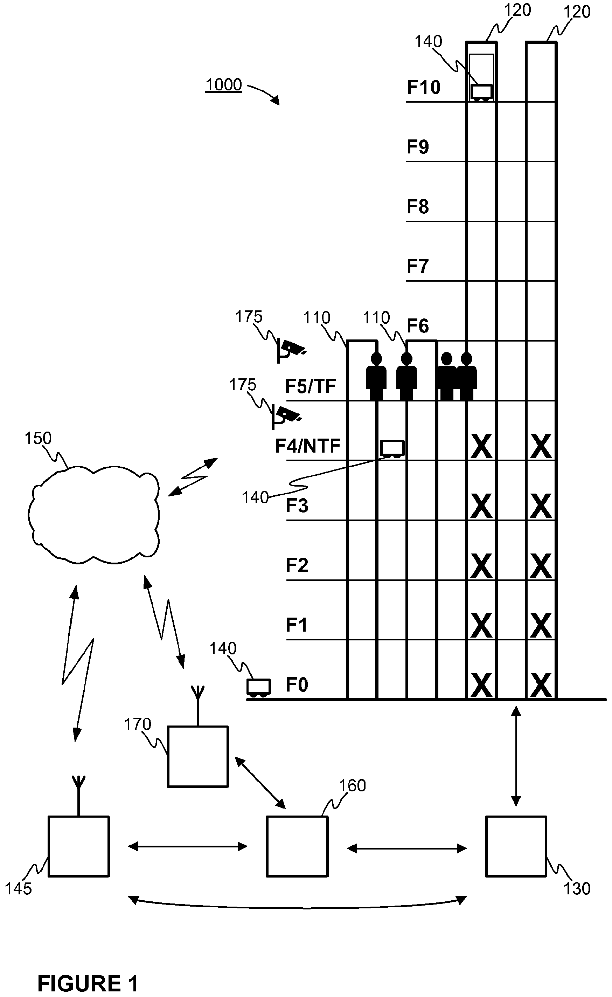

Figure 1 illustrates schematically an environment in which the present invention may be applied to. An elevator system 1000 comprising a plurality of elevators 110, 120 are arranged to operate in a building. The building may be any type of building, such as a so-called high-rise building. The building, or any corresponding premises, comprises a plurality of floors denoted with F1, F2, F3, F4, F5, F6, F7, F8, F9, F10 in Figure 1 which are served at least some of the elevators 110, 120 of the elevator system 1000. In accordance with the invention the elevators 110, 120 may be arranged to serve different sections, also called as zones, in the building, i.e. at least one elevator 110, 120 is arranged to serve a different section of the building than at least one other elevator 110, 120. The sections consists of a plurality of floors F0-F10. The elevator system 1000 is arranged so that passengers may access both elevators 110, 120 arranged to serve different sections from at least one floor, which may also be called as a transfer floor. In view of the non-limiting example schematically illustrated in Figure 1 the first section served by the at least one elevator denoted with the reference number 110 is formed from floors F0-F5 whereas the at least one other elevator denoted with the reference number 120 is arranged to serve a section formed by floors F5-F10. The marking X in the floors F0-F4 with respect to the other elevators 120 is drawn in Figure 1 to indicate that the other elevators 120 are configured to not allowed to travel the respective floors. Thus, the floor F5 may be considered as the transfer floor TF which is used by passengers in order to change between the at least one elevator 110 and the at least one other elevator 120. As said, the implementation shown in Figure 1 is a non-limiting example and the sections may be defined in another manner than shown in Figure 1, e.g. so that there are a plurality of floors overlapping, i.e. there are more than one transfer floor in place. Moreover, the arrangement to serve different sections, or zones, means that there are at least some floors not accessible by both the elevators 110, 120 arranged to serve different sections. The implementation of the elevators 110, 120 and especially the serve of different sections may be done by building up such elevator structures which only allow traveling to those floors belonging to the respective sections or the implementation may be established computationally, i.e. a travel paths of the elevators 110, 120 are defined in a programmable manner which means that the floors F0-F10 allowed to be accessed by the elevators 110, 120 are defined for each elevator separately which also covers an approach in which the travel paths are defined simultaneously for a plurality of elevators belonging to the same group with each other. For the purpose of the present invention the physical implementation of the elevators 110, 120 in the elevator system 1000 is such that that there are at least two floors F0-F10 which may be set as transfer floors in a manner as is described in the forthcoming description.

The elevator system 1000 is controlled with an elevator controller 130 which has a responsibility to operate the elevator system 1000 in accordance with an input received from various sources. The inputs may e.g. be elevator calls which carry information that a party is requiring a service from the elevator system 1000 which typically corresponds to a request to carry a passenger from one floor into another floor in the building. Without saying it is clear that the elevator controller 130 is communicatively connected to various entities of the elevator system 1000 in a known way in order to operate the elevator system 1000.

For sake of clarity it is worthwhile to mention that the elevator system 1000 as schematically depicted in Figure 1 comprise a large number of other entities not described herein.

As said, the elevator system 1000 operated in the building is arranged to serve passengers residing in the building. In accordance with the invention the elevator system 1000 is arranged to serve besides human passengers also robot passengers called as mobile robots and denoted with a reference 140 in Figure 1 in the building. The mobile robots 140 shall be understood as devices which may operate autonomously or at least semi-autonomously and perform predefined tasks, such as delivering goods, in the various locations in the building. Thus, the mobile robots 140 may e.g. perform indoor positioning e.g. by utilizing devices and systems arranged in the building. The mobile robots 140 may also be arranged to communicate with other systems in the building, such as with the elevator system 1000 so that the mobile robots 1000 may utilize the service provided by the elevator system 1000. The mobile robots 140 may be controlled from a robot controller 145 with whom the mobile robots 140 may be communicatively connected over one or more communication network 150, such as a mobile communication network. The communication between the mobile robots 140 and the robot controller 145 may be related to the tasks assigned to the mobile robots 140 but also to supporting the mobile robots 140 in their operation.

In accordance with an embodiment the robot controller 145 and the elevator controller 130 may be arranged to communicate through a mediator device called as a service controller 160. The service controller 160 may be considered as a control system implemented with one or more computing devices configured to receive input from various sources, to perform analysis to the data received and generate signals by means of which it may control one or more entities either directly or indirectly in a manner as described in the forthcoming description. In addition to the communication with the robot controller 145 and the elevator controller 130 the service controller 160 may communicate with sensor system arranged to obtain predefined data e.g. from the building. Such a sensor system may e.g. generate data indicative on a state in one or more floors F0-F10 wherein the state may refer to an occupancy, such as crowdedness, in the respective floor(s). The sensor system may consist of a sensor controller 170 and a number of sensors 175 arranged at one or more pre-defined locations to be monitored. The communication between the service controller 160 and the sensor system, e.g. with the sensor controller 170, may be arranged by applying any known communication technology based e.g. on wireless communication and/or wired communication. The same applies to the communication between the sensor(s) 175 and the sensor controller 170. It is also worthwhile to understand that the functionality of the service controller 160 may be integrated to another controller, such as to the elevator controller 130 or the robot controller 145 of a robot system, even if the service controller 160 is illustrated as a separate entity in Figure 1. It may even be arranged that the functionality of the service controller 160 is arranged to at least one of the mobile robots 140 by arranging the respective mobile robots 140 to communicate with necessary entities as well as to receive data as is described in the forthcoming description. Furthermore, the functionalities of the robot controller 145 and the sensor controller 170 may also be integrated into another controller in the corresponding manner, such as into the service controller 160 or even into the elevator controller 130. For sake of clarity it is worthwhile to mention that the data received by the service controller 160 may be conveyed through other controllers than directly between certain two controllers. For example, the data from the sensors may e.g. be conveyed to the service controller 160 over the elevator controller 130 especially in an implementation wherein the applied sensors 175 belong to the elevator system 1000. Moreover, the term sensor shall be understood in a broad manner and to cover any way to generate data from which the aspects as mentioned above may be derived to. In some example embodiments such data may e.g. be received from the elevator controller, e.g. derived from data indicative of elevators calls to and from a certain floor, such as the one or more transfer floors, based on which a state of the respective floor(s) may be established. Alternatively or in addition, the mobile robots 140 may also operate as sensors e.g. so that they either are equipped with applicable sensors or data obtainable from the mobile robots 140 may be utilized in the context as described. For example, data descriptive of a movement of the mobile robots 140 may be analyzed for the purpose. E.g. in a situation it may be detected that the mobile robots 140 move at a certain floor, such as in the transfer floor, with a speed below a certain reference level, such as are not moving at all, it may be utilized in defining a state, such as a value descriptive of an occupancy, in the respective floor.

In order to describe at least some further aspects of the invention it is hereby assumed that at least one floor is defined to be a transfer floor which enables passengers, such as human passengers and mobile robots 140, to exchange between the elevators 110, 120 arranged to serve different sections of the building. E.g. in the non-limiting implementation of the elevator system 1000 in Figure 1 such a transfer floor is the floor denoted with F5 and the elevators denoted with 110 serve a section including the floor F5 together with the floors F0-F4 whereas the elevators denoted with 120 serve a section including the floor F5 together with the floors F6-F10. As said, a plurality of floors may be set to transfer floors at a certain instant of time in a programmable manner. Next, a method according to the invention is now described in the non-limiting setup of Figure 1 wherein the method is for managing a travel of a mobile robot 140 in a building equipped with an elevator system 1000 comprising at least one elevator 110, 120 is arranged to serve a different section of the building than at least one other elevator 110, 120 and wherein the at least one elevator 110, 120 and the at least one other elevator 110, 120 are both accessible from at least one transfer floor at a certain instant of time. For describing the method in the setup of Figure 1 it may be assumed that the method is implemented by the service controller 160, but the method is implementable by any corresponding control system.

In a step 210 the service controller 160 receives data indicative of a state of at least one transfer floor F5. In other words, the received data may represent the state of the at least transfer floor F5. Naturally, it is possible to arrange that the service controller 160 receives corresponding data indicative of the states in at least some other floors than only the transfer floor(s) F5. As derivable already from the foregoing description the data received 210 is such that it is indicative of the state of the at least one transfer floor F5 and, thus, the service controller 160 may analyse it in order to generate understanding on the state of the respective floor(s). The generation of the understanding may refer to an operation in which the received data is analyzed, e.g. floor by floor, with predefined mechanisms, such as by applying comparison data with respect to the received data or by inputting the received data to an analysis machine, e.g. implemented with a trained machine-learning model, in order to generate the understanding on the state in the floor and at least one value descriptive of it. As mentioned, the state of the floor may e.g. descriptive of an occupancy of the floor due to that an occupied floor may prevent, or at least slow down, a travel of a mobile robot 140 if the mobile robot 140 enters the occupied floor which travel may here comprise an exchange between the elevators 110, 120 in the respective floor in order to access from one section to another section served by different elevators 110, 120. For sake of completeness, it is worthwhile to mention that the state of the floor, and the occupancy, may be expressed in a predefined manner being descriptive of a capability of the mobile robot(s) 140 to travel in the respective location, cf. in the transfer floor TF. Thus, the state of the floor e.g. expressed with the term 'occupancy' may express the state as a percentage of occupancy of the floor or as a value descriptive of a turnover of passengers on the floor or as a movement speed of one or more objects, such as passengers or mobile robots 140, on the floor, or as a quality value of the floor (e.g. based on dirtiness, wetness, lighting conditions, or anything similar which may challenge the movement of the mobile robot at the floor in question), or any corresponding value indicative of the same. Furthermore, the service controller 160, or the respective entity arranged to perform the method, may be arranged to receive the data indicative of the state of the at least one transfer floor in a continuous manner or at predefined intervals as well as to perform the analysis upon the receipt 210 of the data.

For avoidance of any doubt the data descriptive of the state of the at least one transfer floor in the above-described step 210 may be received from a number of sources as already discussed in the foregoing description, such as from at least one of the following: a sensor system arranged to monitor the at least one transfer floor, an elevator system, a robot system. Alternatively or in addition, the data may be received from a cloud computing system arranged to possess, or having access, to the data descriptive of the state of the at least one transfer floor. For example, the data may be received from a sensor system arranged to generate such data based on which a result descriptive of the state of the at least one transfer floor TF may be determined. As also mentioned in the foregoing description the sensor, and thus the sensor data, shall be understood in a broad manner and may also comprise data received, or derivable, from the elevator system 1000, for example in a form descriptive of elevator calls to a certain floor under monitoring, and/or data received from the robot system, for example in a form descriptive of a movement of mobile robots 140 in a certain floor under monitoring. Generally speaking the data may be received from the mentioned systems or from a user or a passenger or a building manager e.g. through user terminals possessed by any of the mentioned parties. For example, the users may inform their observations at different floors with an application executed by their user terminals. Such a solution may e.g. be arranged with the cloud computing system that is configured to gather data from the user terminals. In some other approaches the data descriptive of the state of the at least transfer floor may be generated with a statistical analysis of a historical data e.g. gathered from various floors over a predefined time window and based on the statistical analysis a result of it may be used for the purpose of the data descriptive of the state of the at least one transfer floor and applied accordingly in a time-based manner. Correspondingly, a user of the system may e.g. define a time window that a certain data is to be used as the data descriptive of the state of the at least one transfer floor. Such data may e.g. define that the floor is occupied at a certain level at a certain instant of time even if the true situation in the respective floor(s) differs from the definition. Worth mentioning is that the present invention does not limit anyhow combining data received from various sources in order to generate understanding with respect to the state of at least one transfer floor.

Furthermore, the service controller 160 receives 220 a service request for providing an elevator service to the mobile robot 140 in question. The service request may be received by the service controller from another controller. In accordance with an embodiment the service controller 160 may receive the service request from an elevator controller 130 which has received it e.g. from the mobile robot 140 or from the robot controller 145 which may e.g. manage tasks assigned to the number of robots. Alternatively or in addition, the service controller 160 may receive 220 the service request directly from the mobile robot 140 or from the robot controller 145 if such communication paths are arranged and allowed to. The service request may carry information indicative on a destination floor of the mobile robot 140, but also on a departure floor, i.e. the floor from which the mobile robot 140 needs the elevator service, unless it is not receivable in any other manner. In response to the receipt of the service request the service controller 160 may be configured to determine if the mobile robot 140 requires service from the two elevators 110, 120 arranged to serve different sections of the building. In other words, it is determined if the mobile robot 140 requires performing a change between the elevators 110, 120 serving the different sections at a transfer floor TF in order to reach the destination floor from the departure floor. For sake of completeness, it is worthwhile to mention that in some example embodiments the service request may carry data indicative of a destination point and a departure point of the mobile robot 140 which differ from the corresponding floors. In such an approach the service controller 160 is arranged to determine the floors required to perform such a travel route by the mobile robot 140.

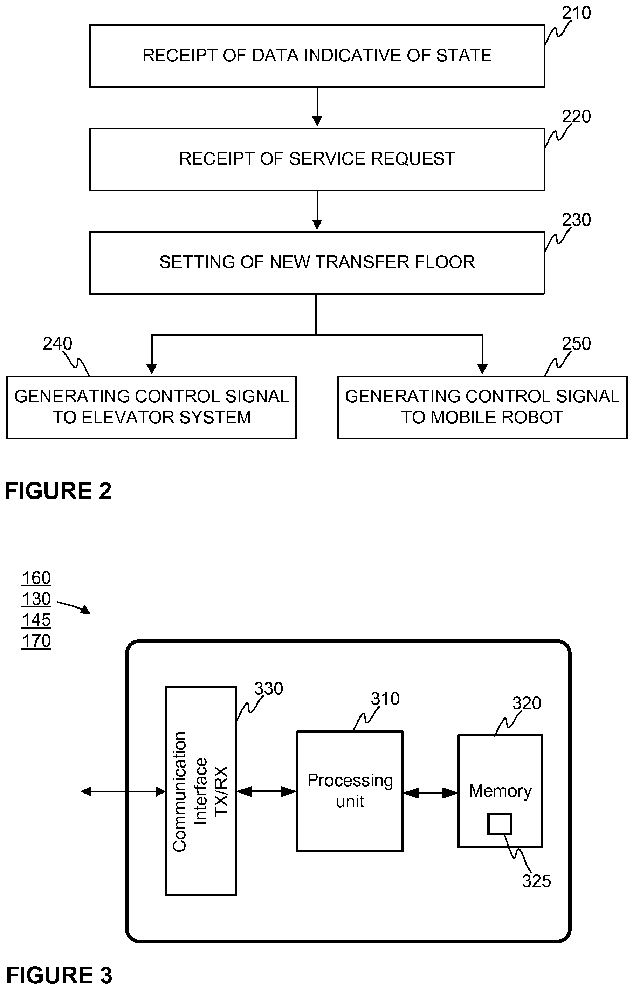

It is also worthwhile to mention that the steps referred with 210 and 220 in Figure 2, i.e. the receipt 210 of data indicative of the state of the at least one transfer floor and the receipt 220 of the service request for providing elevator service to the mobile robot 140, may occur in any order or at least in part concurrently to each other. Advantageously, it may be arranged so that the state at the at least one transfer floor TF is determined at a predefined interval with respect to the service request of the elevator service. It is also possible to arrange that the state of the service floor(s) is continuously monitored e.g. also when a service provision to the mobile robot 140 is initiated by the elevator system so as to detect changes in the transfer floor TF, if any, also when the mobile robot 140 is already traveling with the first elevator 110, 120. This kind of approach allows re-routing of the travel of the mobile robot 140 in an enhancedly dynamic way. Thus, the service controller 160 receives the respective pieces of data from the sources required to continue the method with respect to the mobile robot 140 as is described in the forthcoming description.

Moreover, at a predefined instant of time the service controller 160 may be arranged to evaluate the state of the at least one transfer floor TF in terms of a predefined criteria, such as the occupancy as described, by comparing at least one value derivable from the received data and descriptive of the state of the at least one transfer floor TF to a reference state of the respective transfer floor TF. The reference state may be defined for each transfer floor TF, and also other floors if applicable, individually, i.e. on a floor-by-floor basis, or a common reference state may be defined to a plurality of transfer floors TF, and other floors. For sake of completeness it is worthwhile to mention that various reference states may be defined for one or more floors so as to group floors to each other and defining references states in accordance with the groups. Such an approach has an advantage that it is efficient but also it enables e.g. to take into account characteristics of the respective floors, such as a floor plan, into account since the capacities of the floors may differ based on the floorplans, for example. As already mentioned the evaluation of the state of the transfer floor(s) TF may be performed under a predefined time scheme, such as upon a receipt 210 of the data indicative of the state of the at least one transfer floor TF or at any other instant of time at which the further steps of the method are still possible to be performed in terms of the travel of the mobile robot 140 which corresponds to that it is still possible to arrange the mobile robot 140 to follow a new route at least in part as is described in the forthcoming description. Still further, the evaluation of the state of the at least one transfer floor TF through the comparison shall be understood to also cover implementations in which the evaluation is performed by a pre-trained machine-learning model. Fundamentally thinking the implementation also in such approaches is based on the comparison by the artificial intelligence of a certain state to previous states detected to be out of the expected state, i.e. there is a reference state set by the training.

In case the service controller 160 detects that the state of the transfer floor TF in question corresponds to the reference state it does not take any actions with respect to the predefined normal operation. In other words, the service controller 160 allows the mobile robot 140 to use the evaluated transfer floor TF for exchanging between the elevators 110, 120 arranged to serve different sections of the building. In such a case, the service controller 160 may e.g. be configured to transfer the data of the service request for providing the elevator service to the mobile robot at least to the elevator controller 130 and/or to the robot controller 145, or even to the mobile robot 140. In an implementation in which the service controller 160 has merely a monitoring role in the situation in which the state of the transfer floor TF corresponds to the reference state the service controller 160 may not take any actions and the service provision by the elevator system to the mobile robot 140 continues as planned. However, in response the service controller 160 detects that the state of the at least one transfer floor TF does not correspond to the reference state the service controller 160 may be configured to set another floor to the at least one transfer floor TF as a new transfer floor for at least the mobile robot 140. In Figure 1 the floor denoted with F4 may be considered as an example of the new transfer floor and, thus, also denoted with NTF as indicative of the new transfer floor. The other floor to be set as the new transfer floor NTF may be selected in an order pre-defined to be applied by the service controller 160 based on predefined criteria wherein a primary criterion is that the new transfer floor NTF shall be accessible from both elevators 110, 120 serving the different sections of the building. Also other criterion, or criteria, may be applied to. In accordance with a sophisticated embodiment of the invention candidate floors for the new transfer floor may be monitored e.g. in the same way as the floor(s) already set as the transfer floors TF and based on states of the respective floors at least one of them is selected as the new transfer floor NTF. For example, it may be arranged that at least one of the monitored floors e.g. having the lowest occupancy at a predefined instant of time, or in one or more predefined time windows, is to be selected as the new transfer floor NTF. If a plurality of floors are needed to be set as the new transfer floors NTF they may be selected in the order of non-occupancy, for example. Also other criteria may be used in the selection of the new transfer floors NTF. For example, the service controller 160 may be configured to maintain such a list of candidate floors by monitoring the potential floors in a pre-defined manner, such as continuously, and one or more optimal floors in the list may be set as new transfer floors NTF.

The setting of the at least one floor as the new transfer floor NTF for the mobile robot 140 by the service controller 160 based on one or more predetermined criteria as described causes the service controller 160 to generate 240 a control signal to the elevator system 1000 to request an allowance of the at least one elevator 110 and the at least one other elevator 120 to travel to the new transfer floor NTF which elevators 110, 120 are those that serve the different sections in the building. In other words, the service controller 160 generates a control signal to the elevator system 1000, and to the elevator controller 130 therein, to request a redefinition of the elevator system 1000 to operate so that the elevators serving different sections may both be accessed from the new transfer floor NTF. For example, in the non-limiting embodiment as shown in Figure 1 the other elevator denoted with 120 is allowed to travel and stop for receiving at least some passengers at the floor F4 which is the new transfer floor NTF. Moreover, in a situation that the mobile robot 140 has provided the service request of the elevator service to the service controller 160 and that has ended up to the elevator system 1000 an indication on the new destination floor, i.e. the new transfer floor NTF, with respect to the service request of the mobile robot 140 is updated in the elevator system 1000. This may be performed so that the control signal to the elevator system 1000 also carries data indicative of the new transfer floor NTF as the destination floor of the elevator selected to serve the mobile robot 140. Alternatively, this piece of data may be carried in a separate signal to the elevator system 1000 generated e.g. in response to a receipt of a confirmation indicative of that both of the elevators 110, 120 arranged to serve different sections are allowed to travel to the new transfer floor NTF. Such a signal may comprise data at least indicative of a travel path of the mobile robot for controlling the elevator system to provide service to the mobile robot with respect to the new transfer floor wherein the mobile robot refers to one intending to use the elevator or already being served by the elevator in question. Still further, in some embodiments the service controller 160 is not necessarily involved in the generation of the service call to the elevator system 1000 for the mobile robot 140 as discussed in the forthcoming description.

In addition to the generation 240 of the control signal to the elevator system 1000 the service controller 160 is arranged to generate 250 a control signal to the mobile robot 140 in question. The control signal is arranged to carry data at least indicative of a travel path of the mobile robot 140 wherein the travel path utilizes the new transfer floor NTF. The control signal may also comprise other data, such as further data relating to a route of the mobile robot 140 in the building in addition to the section provided by the elevator system 1000. The generation 250 of the control signal to the mobile robot 140 may comprise an embodiment wherein the control signal is directly transmitted to the mobile robot 140 from the service controller 160 over an applied communication channel but also another embodiment in which the service controller 160 generates the control signal to the robot controller 145 which then provides, e.g. through a generation of a control signal in the robot environment in a form understandable by the mobile robot 140, the instruction with respect to the route to the mobile robot 140 in question. Moreover, the generation 250 of the control signal in the described way may cause a generation of a service call to the elevator system 1000 to serve the mobile robot 140 in accordance with the new route in which the new transfer floor NTF is utilized. The generation of the service call to the elevator system 1000 may be performed by the mobile robot 140 if it is provided with a communication channel with the elevator system 1000, such as with the elevator controller 130, or the robot controller 145 may be configured to perform the service call to the elevator system 1000, such as to the elevator controller 130 therein. In response to the receipt of the service call by the elevator system 1000 it may be configured to perform internal signaling to cause serving of the service call by the elevator system 1000 in order to carry the mobile robot 140 from the departure floor to the destination floor.

The above-described steps 240 and 250 may be implemented consecutive to each other or concurrently at least in part. In an embodiment the generations 240, 250 of the control signals are arranged to be performed so that the service controller 160 may be arranged to receive a confirmation from the elevator system 1000, i.e. from the elevator controller 130, on that the new transfer floor NTF is taken into use by both of the elevators 110, 120 serving the different sections of the building prior to that the service controller 160 generates the control signal to the mobile robot 140 in the described manner. Such a confirmation may thus occur when one of the elevators 110, 120 is arranged, by the elevator system 100, to travel in the respective new transfer floor NTF in case the other elevator 110, 120 already is allowed to use the same floor or it may occur when both of the elevators 110, 120 are allowed to travel to the floor set as the new transfer floor NTF.

With respect to the setting of the new transfer floor NTF it may be arranged that it is usable as the transfer floor only with mobile robots 140 in a situation that the route assigned, or to be assigned, to the mobile robot 140 requires a utilization of both of the elevators 110, 120 serving different sections in the building. In other words, the new transfer floor NTF is not allocated in the elevator system 1000 in a case that the passenger(s) are human passenger(s). This may be achieved by indicating to the elevator system 1000 in the service request that a mobile robot 140 requires the elevator service. This approach has an advantage that an occupation of the new transfer floor NTF is minimized since no human passenger(s) are carried thereto, but only the mobile robot(s) 140 in the described situation.

As also mentioned in the foregoing description according to some embodiments of the invention the service controller 160 may be configured to continue the evaluation of the state of the at least one transfer floor TF even if a service call is allocated in the elevator system 1000 in order to send an elevator car of an elevator 110, 120 to pick up a mobile robot 140 from a departure floor and even if the mobile robot 140 has already entered the elevator car in the respective elevator 110, 120. There may be set an instant of time until which it is possible to perform the method as describer, i.e. set a new transfer floor NTF and instruct the mobile robot 140 to utilize that in its route in the building. Such an instant of time may e.g. be until it is possible to stop the elevator car in a manner complying with any safety related rules in the respective floor. Thus, the service controller 160, upon a detection that the state of the at least one transfer floor does not correspond to a reference state defined for the respective floor, may be configured to determine the new transfer floor NFT and to detect if a service call is already allocated in the elevator system 1000, or if it is already served by the elevator system 1000 and in this case to determine a position of the elevator car with respect to the new transfer floor NTF. In response to the above-described determinations and especially if it is still possible to change the route of the mobile robot 140 to utilize the new transfer floor NTF, the service controller 160 may be configured to re-define the route of the elevator car to stop at the new transfer floor NTF and cause the mobile robot to utilize the new transfer floor NTF by exiting from the elevator car in the respective floor. This may also comprise a provisioning a new route in the building to the mobile robot 140 in order to travel from the first elevator 110, 120 to the other elevator 110, 120 in the new transfer floor NTF. Moreover, in this situation the second elevator 110, 120, i.e. the one to which the mobile robot 140 enters in the new transfer floor NTF to reach the final destination in the building, is re-routed to cause it to travel to the new transfer floor NTF to pick up the mobile robot 140 from there. In the described manner it is possible to control the travel of the mobile robot 140 in such a way that it is instructed to utilize more suitable route, and especially a transfer floor, as long as it is possible to do so. This improves an operation of the mobile robot 140 in the building.

In the above given description the approach is such that in response to a detection that the state of the at least one transfer floor TF does not correspond to the reference state, the new transfer floor is selected in the described manner. For sake of completeness it may also be arranged that a plurality of new transfer floors NTF are selected in the described manner in the detected situation in the at least one original transfer floors TF. With such an approach the aim is to solve the unacceptable state in the original transfer floor(s) as efficiently as possible by not carrying at least the mobile robots 140 into the floor with the challenging situation.

In accordance with some embodiments of the present invention it may be arranged that the delivery of the data descriptive of the state of the at least one transfer floor detected not corresponding to the reference state is continued even if re-arrangement of the transfer floors in the described manner is performed. At some point of time it may be detected that the state in the at least one original transfer floor TF has returned to be on an acceptable level, i.e. it corresponds to the reference state. In response to such a detection the service controller 160 may be arranged to operate so that the original implementation of the elevator system, and the system in general, is returned by releasing the at least one new transfer floor NTF from the use as the transfer floor, and the original transfer floor(s) are again used for supplying the passengers, i.e. human passengers and the mobile robot 140, in the elevators 110, 120. Naturally, there may be arranged a delay of blocking at least one of the elevators 110, 120 to access the new transfer floor NTF until the pending service calls to the floor in question are served.

Generally speaking the method is described in the foregoing description to be implemented by the service controller 160 corresponding to a control system implemented with one or more computing devices configured to receive input from various sources, and to perform analysis to the data received and generate signals by means of which it may control one or more entities either directly or indirectly in a manner as described in order to manage the travel of the mobile robot 140 in the building. The service controller 160 is described as a separate entity to the other entities. However, the functionality of the service controller 160, i.e. the execution of the method, may also be arranged to another control system, such as to the elevator controller 130, to the robot controller 145, or even to the sensor controller 170. In such an implementation necessary communication channels between the other entities are arranged together with an implementation of the execution of the method in the respective control system. The execution of the method may also be implemented in a shared computing environment so that one control system is configured to perform one or more of the method steps whereas at least one other control system is configured to perform one or more remaining method steps. For example, the control system may correspond to one or more apparatuses capable of performing computing in a way to achieve the implementation of the method.

An example of an apparatus configurable to implement the operation of the control system, such as the service controller 160, the robot controller 145, the elevator controller 130 and/or the sensor controller 170, is schematically illustrated in Figure 1. The control system may be configured to perform the method according to the invention as described with the examples in the foregoing description. Thus, the apparatus of Figure 3 may be configured to perform a management of a travel of a mobile robot 140 in a building equipped with an elevator system 1000. For sake of clarity, it is worthwhile to mention that the block diagram of Figure 3 depicts some components of an entity that may be employed to implement a functionality of the apparatus. The apparatus of Figure 3 comprises a processor 310 and a memory 320. The memory 320 may store data, such as pieces of data as described, but also computer program code 325 causing the operation in the described manner. The apparatus may further comprise a communication interface 330, such as a wireless communication interface or a communication interface for wired communication, or both to communicate with other entities as described. The communication interface 330 may thus comprise one or more modems, antennas, and any other hardware and software for enabling an execution of the communication e.g. under control of the processor 310. Furthermore, I/O (input/output) components may be arranged, together with the processor 310 and a portion of the computer program code 325, to provide a user interface for receiving input from a user, such as from a technician, and/or providing output to the user of the apparatus when necessary. In particular, the I/O components may include user input means, such as one or more keys or buttons, a keyboard, a touchscreen, or a touchpad, etc. The I/O components may include output means, such as a loudspeaker, a display, or a touchscreen. The components of the apparatus may be communicatively connected to each other via data bus that enables transfer of data and control information between the components.

The memory 320 and at least a portion of the computer program code 325 stored therein may further be arranged, with the processor 310, to cause the apparatus to perform at least a portion of a method as is described herein. The processor 310 may be configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some, or all of which may be integrated / removable and / or may provide permanent / semi-permanent / dynamic / cached storage.

The computer program code 325 may comprise computer-executable instructions that implement functions that correspond to steps implemented in the method when loaded into the processor 310 of the respective control system. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus, such as a computer, to perform a method as described. Hence, the apparatus may comprise at least one processor 310 and at least one memory 320 including the computer program code 325 for one or more programs, the at least one memory 320 and the computer program code 325 configured to, with the at least one processor 310, cause the apparatus implementing the control system to perform the method.

The computer program code 325, or at least some portion of it, may be pro-vided e.g. a computer program product comprising at least one computer-readable non-transitory medium having the computer program code 325 stored thereon, which computer program code 325, when executed by the processor 310 causes the apparatus to perform the method. The computer-readable non-transitory medium may comprise a memory device or a record medium, such as a CD-ROM, a DVD, a Blu-ray disc, or another article of manufacture that tangibly embodies the computer program. As another example, the computer program may be provided as a signal configured to reliably transfer the computer program.

Still further, the computer program code 325 may comprise a proprietary application, such as computer program code for causing an execution of the method in the manner as described in the description herein.

Any of the programmed functions mentioned may also be performed in firmware or hardware adapted to or programmed to perform the necessary tasks.

For sake of completeness it is worthwhile to mention that the entity performing the method in the role of the control system may also be implemented with a plurality of apparatuses, such as the one schematically illustrated in Figure 3, as a distributed computing environment corresponding to a control unit. For example, one of the apparatuses may be communicatively connected with the other apparatuses, and e.g. share the data of the method, to cause another apparatus to perform at least one other portion of the method. As a result, the method performed in the distributed computing environment generates the control signal indicative of the assignment of the responsibility as described. The functionalities of the control system as described may also be integrated to an entity also configured to perform other operations, such as the elevator controller 130 or other controllers as already described.

The invention brings various advantages from the mobile robot 140 point of view, but also from a people flow point of view. Due to that the mobile robots 140 has limited possibilities in terms of movement and a capability to monitor an outside world, it is advantageous not to bring the mobile robots 140 to such spaces in which there are challenges to operate. This may refer to a situation that a certain floor needed by the mobile robot 140 in its travel path is occupied, e.g. due to a huge number of people, and such floor shall be avoided by the mobile robots 140. On the other hand, the re-routing of the travel of the mobile robot in the building enables the mobile robot 140 to maintain their service capability since the mobile robots 140 are enabled to use such routes, cf. transfer floors, which are not congested. From the people flow point of view the advantages of the invention correspond to ones achieved with respect to the mobile robots 140. Namely, since the mobile robots 140 are re-routed in the described manner it helps solving the congested situation in the transfer floor since it becomes reserved only for human passengers. All in all, the approach according to the invention improves the overall service experience in the building.

The specific examples provided in the description given above should not be construed as limiting the applicability and/or the interpretation of the appended claims. Lists and groups of examples provided in the description given above are not exhaustive unless otherwise explicitly stated.

## Claims

1. A method for managing a travel of a mobile robot (140) in a building equipped with an elevator system (1000) comprising at least one elevator arranged (110, 120) to serve a different section of the building than at least one other elevator (110, 120) and wherein the at least one elevator (110, 120) and the at least one other elevator (110, 120) are both accessible from at least one transfer floor (TF), the method, performed by a control system (160), comprises:
receiving (210) data indicative of a state of the at least one transfer floor (TF),
receiving (220) a service request for providing an elevator service to the mobile robot (140),
setting (230), in response to a detection that the state of the at least one transfer floor (TF) does not correspond to a reference state, another floor to the at least one transfer floor (TF) as a new transfer floor (NTF) for at least the mobile robot (140),
generating (240) a control signal to the elevator system (1000) to request an allowance of the at least one elevator (110, 120) and the at least one other elevator (110, 120) to travel to the new transfer floor (NTF), and
generating (250) a control signal to the mobile robot (140), the control signal comprising data at least indicative of a travel path of the mobile robot (140) utilizing the new transfer floor (NTF).

2. The method according to claim 1, wherein the data indicative of the state of the at least one transfer floor (TF) is received from at least one of the following: a sensor system arranged to monitor the at least one transfer floor (TF), an elevator system (1000), a robot system, a cloud computing system arranged to receive input from at least one user.

3. The method according to any of the preceding claims, wherein the data indicative of the state of the at least one transfer floor (TF) is descriptive of an occupancy of the at least one transfer floor (TF).

4. The method according to any of the preceding claims, wherein the setting (230) of the other floor as the new transfer floor (NTF) is performed based on one of the following: a pre-defined order of floors in the building, a monitoring a number of pre-defined candidate floors for the new transfer floor (NTF).

5. The method according to claim 4, wherein the setting of the other floor as the new transfer floor (NTF) based on the monitoring the number of the pre-defined candidate floors for the new transfer floor (NTF) is performed by:
monitoring occupancies of the pre-defined candidate floors, and
selecting the candidate floor having the lowest occupancy among the candidate floors to be set as the new transfer floor (NTF).

6. The method according to any of the preceding claims, the method further comprises:
receiving a confirmation indicative of that the at least one elevator (110, 120) and the at least one other elevator (110, 120) are allowed to travel to the new transfer floor (NTF), and
generating, to the elevator system (1000), a signal comprising data at least indicative of a travel path of the mobile robot (140) in the elevator (110, 120) for controlling the elevator system (1000) to provide service to the mobile robot (140) with respect to the new transfer floor (140).

7. The method according to any of the preceding claims, wherein
continuing detecting if the state of the at least one transfer floor (TF) does not correspond to the reference state during the mobile robot (140) is served by the elevator system (1000),
determining, in response to the detection that the state of the at least one transfer floor (TF) does not correspond to the reference state during the mobile robot (140) is served by the elevator system (1000), if the elevator (110, 120) serving the mobile robot (140) is controllable to stop at the new transfer floor (NTF), and
generating, in response to an outcome of the determination that the elevator (110, 120) serving the mobile robot (140) is controllable to stop at the new transfer floor (NTF), a control signal to the elevator system (1000) to stop at the new transfer floor (NTF).

8. A control system (160) for managing a travel of a mobile robot (140) in a building equipped with an elevator system (1000) comprising at least one elevator arranged (110, 120) to serve a different section of the building than at least one other elevator (110, 120) and wherein the at least one elevator (110, 120) and the at least one other elevator (110, 120) are both accessible from at least one transfer floor (TF), **characterised in that** the control system (160) is configured to:
receive (210) data indicative of a state of the at least one transfer floor (TF),
receive (220) a service request for providing an elevator service to the mobile robot (140),
set (230), in response to a detection that the state of the at least one transfer floor (TF) does not correspond to a reference state, another floor to the at least one transfer floor (TF) as a new transfer floor (NTF) for at least the mobile robot (140),
generate (240) a control signal to the elevator system (1000) to request an allowance of the at least one elevator (110, 120) and the at least one other elevator (110, 120) to travel to the new transfer floor (NTF), and
generate (250) a control signal to the mobile robot (140), the control signal comprising data at least indicative of a travel path of the mobile robot (140) utilizing the new transfer floor (NTF).

9. The control system (160) according to claim 8, wherein the control system (160) is configured to receive the data indicative of the state of the at least one transfer floor (TF) from at least one of the following: a sensor system arranged to monitor the at least one transfer floor (TF), an elevator system (1000), a robot system, a cloud computing system arranged to receive input from at least one user.

10. The control system (160) according to claim 8 or claim 9, wherein the data indicative of the state of the at least one transfer floor (TF) is descriptive of an occupancy of the at least one transfer floor (TF).

11. The control system (160) according to any of the preceding claims 8 to 10, wherein the control system (160) is configured to perform the setting (230) of the other floor as the new transfer floor (NTF) based on one of the following: a pre-defined order of floors in the building, a monitoring a number of pre-defined candidate floors for the new transfer floor (NTF).

12. The control system (160) according to claim 11, wherein the control system (160) is configured to perform the setting of the other floor as the new transfer floor (NTF) based on the monitoring the number of the pre-defined candidate floors for the new transfer floor (NTF) by:
monitoring occupancies of the pre-defined candidate floors, and
selecting the candidate floor having the lowest occupancy among the candidate floors to be set as the new transfer floor (NTF).

13. The control system (160) according to any of the preceding claims 8 to 12, the control system (160) further configured to:
receive a confirmation indicative of that the at least one elevator (110, 120) and the at least one other elevator (110, 120) are allowed to travel to the new transfer floor (NTF), and
generate, to the elevator system (1000), a signal comprising data at least indicative of a travel path of the mobile robot (140) in the elevator (110, 120) for control the elevator system (1000) to provide service to the mobile robot (140) with respect to the new transfer floor (140).

14. The control system (160) according to any of the preceding claims 8 to 13, wherein the control system (160) further configured to:
continue detecting if the state of the at least one transfer floor (TF) does not correspond to the reference state during the mobile robot (140) is served by the elevator system (1000),
determine, in response to the detection that the state of the at least one transfer floor (TF) does not correspond to the reference state during the mobile robot (140) is served by the elevator system (1000), if the elevator (110, 120) serving the mobile robot (140) is controllable to stop at the new transfer floor (NTF), and
generate, in response to an outcome of the determination that the elevator (110, 120) serving the mobile robot (140) is controllable to stop at the new transfer floor (NTF), a control signal to the elevator system (1000) to stop at the new transfer floor (NTF).

15. A computer program comprising instructions which, when the program is executed by a control system (160) according to claim 8 to carry out the method according to any of claims 1 to 7.

16. A computer-readable medium having stored thereon the computer program according to claim 15.

## Patentansprüche

1. Verfahren zur Verwaltung einer Fahrt eines mobilen Roboters (140) in einem Gebäude, das mit einem Aufzugssystem (1000) ausgestattet ist, das mindestens einen Aufzug umfasst, der dazu ausgelegt ist (110, 120), einen anderen Abschnitt des Gebäudes zu bedienen als mindestens ein anderer Aufzug (110, 120), und wobei der mindestens eine Aufzug (110, 120) und der mindestens eine andere Aufzug (110, 120) beide von mindestens einem Umsteigegeschoss (TF) aus zugänglich sind, wobei das Verfahren (160), das von einem Steuersystem durchgeführt wird, Folgendes umfasst:
Empfangen (210) von Daten, die einen Zustand des mindestens einen Umsteigegeschosses (TF) angeben,
Empfangen (220) einer Dienstanforderung zum Bereitstellen eines Aufzugsdienstes für den mobilen Roboter (140),
Festlegen (230) eines anderen Geschosses als das mindestens eine Umsteigegeschoss (TF) als ein neues Umsteigegeschoss (NTF) für mindestens den mobilen Roboter (140) in Reaktion auf eine Erkennung, dass der Zustand des mindestens einen Umsteigegeschosses (TF) nicht einem Referenzzustand entspricht,
Erzeugen (240) eines Steuersignals an das Aufzugssystem (1000) zum Anfordern einer Erlaubnis für den mindestens einen Aufzug (110, 120) und den mindestens einen anderen Aufzug (110, 120), um zu dem neuen Umsteigegeschoss (NTF) zu fahren, und
Erzeugen (250) eines Steuersignals an den mobilen Roboter (140), wobei das Steuersignal Daten umfasst, die mindestens einen Fahrweg des mobilen Roboters (140) angeben, der das neue Umsteigegeschoss (NTF) nutzt.

2. Verfahren nach Anspruch 1, wobei die Daten, die den Zustand des mindestens einen Umsteigegeschosses (TF) angeben, von mindestens einem von Folgenden empfangen werden: einem Sensorsystem, das dazu ausgelegt ist, das mindestens eine Umsteigegeschoss (TF) zu überwachen, einem Aufzugssystem (1000), einem Robotersystem, einem Cloud-Computing-System, das dazu ausgelegt ist, Eingaben von mindestens einem Benutzer zu empfangen.

3. Verfahren nach einem der vorhergehenden Ansprüche, wobei die Daten, die den Zustand des mindestens einen Umsteigegeschosses (TF) angeben, eine Belegung des mindestens einen Umsteigegeschosses (TF) beschreiben.

4. Verfahren nach einem der vorhergehenden Ansprüche, wobei das Festlegen (230) des anderen Geschosses als das neue Umsteigegeschoss (NTF) basierend auf einem von Folgenden durchgeführt wird: einer vordefinierten Reihenfolge von Geschossen in dem Gebäude, einem Überwachen einer Anzahl von vordefinierten Kandidatengeschossen für das neue Umsteigegeschoss (NTF).

5. Verfahren nach Anspruch 4, wobei das Festlegen des anderen Geschosses als das neue Umsteigegeschoss (NTF) basierend auf dem Überwachen der Anzahl der vordefinierten Kandidatengeschosse für das neue Umsteigegeschoss (NTF) durch Folgendes durchgeführt wird:
Überwachen von Belegungen der vordefinierten Kandidatengeschosse, und
Auswählen des Kandidatengeschosses mit der niedrigsten Belegung unter den Kandidatengeschossen, das als das neue Umsteigegeschoss (NTF) festgelegt werden soll.

6. Verfahren nach einem der vorhergehenden Ansprüche, wobei das Verfahren ferner Folgendes umfasst:
Empfangen einer Bestätigung, die angibt, dass dem mindestens einen Aufzug (110, 120) und dem mindestens einen anderen Aufzug (110, 120) erlaubt wird, zu dem neuen Umsteigegeschoss (NTF) zu fahren, und
Erzeugen eines Signals an das Aufzugssystem (1000), das Daten umfasst, die mindestens einen Fahrweg des mobilen Roboters (140) in dem Aufzug (110, 120) angeben, um das Aufzugssystem (1000) so zu steuern, dass es dem mobilen Roboter (140) einen Dienst in Bezug auf das neue Umsteigegeschoss (140) bereitstellt.

7. Verfahren nach einem der vorhergehenden Ansprüche, wobei
fortgefahren wird, zu erkennen, ob der Zustand des mindestens einen Umsteigegeschosses (TF) nicht dem Referenzzustand entspricht, während der mobile Roboter (140) von dem Aufzugssystem (1000) bedient wird,
in Reaktion auf die Erkennung, dass der Zustand des mindestens einen Umsteigegeschosses (TF) nicht dem Referenzzustand entspricht, während der mobile Roboter (140) von dem Aufzugssystem (1000) bedient wird, bestimmt wird, ob der Aufzug (110, 120), der den mobilen Roboter (140) bedient, steuerbar ist, um an dem neuen Umsteigegeschoss (NTF) anzuhalten, und
in Reaktion auf ein Ergebnis der Bestimmung, dass der Aufzug (110, 120), der den mobilen Roboter (140) bedient, steuerbar ist, um an dem neuen Umsteigegeschoss (NTF) anzuhalten, ein Steuersignal an das Aufzugssystem (1000) erzeugt wird, um an dem neuen Umsteigegeschoss (NTF) anzuhalten.

8. Steuersystem (160) zum Verwalten einer Fahrt eines mobilen Roboters (140) in einem Gebäude, das mit einem Aufzugssystem (1000) ausgestattet ist, das mindestens einen Aufzug umfasst, der dazu ausgelegt ist (110, 120), einen anderen Abschnitt des Gebäudes zu bedienen als mindestens ein anderer Aufzug (110, 120), und wobei der mindestens eine Aufzug (110, 120) und der mindestens eine andere Aufzug (110, 120) beide von mindestens einem Umsteigegeschoss (TF) aus zugänglich sind, **dadurch gekennzeichnet, dass** das Steuersystem (160) zu Folgendem konfiguriert ist:
Empfangen (210) von Daten, die einen Zustand des mindestens einen Übertragungsgeschosses (TF) angeben,
Empfangen (220) einer Dienstanforderung zum Bereitstellen eines Aufzugsdienstes für den mobilen Roboter (140),
Festlegen (230) eines anderen Geschosses als das mindestens eine Umsteigegeschoss (TF) als ein neues Umsteigegeschoss (NTF) für mindestens den mobilen Roboter (140) in Reaktion auf eine Erkennung, dass der Zustand des mindestens einen Umsteigegeschosses (TF) nicht einem Referenzzustand entspricht,
Erzeugen (240) eines Steuersignals an das Aufzugssystem (1000) zum Anfordern einer Erlaubnis für den mindestens einen Aufzug (110, 120) und den mindestens einen anderen Aufzug (110, 120), um zu dem neuen Umsteigegeschoss (NTF) zu fahren, und
Erzeugen (250) eines Steuersignals an den mobilen Roboter (140), wobei das Steuersignal Daten umfasst, die mindestens einen Fahrweg des mobilen Roboters (140) angeben, der das neue Umsteigegeschoss (NTF) nutzt.

9. Steuersystem (160) nach Anspruch 8, wobei das Steuersystem (160) dazu konfiguriert ist, die Daten, die den Zustand des mindestens einen Umsteigegeschosses (TF) angeben, von mindestens einem von Folgenden zu empfangen: einem Sensorsystem, das dazu ausgelegt ist, das mindestens eine Umsteigegeschoss (TF) zu überwachen, einem Aufzugssystem (1000), einem Robotersystem, einem Cloud-Computing-System, das dazu ausgelegt ist, Eingaben von mindestens einem Benutzer zu empfangen.

10. Steuersystem (160) nach Anspruch 8 oder 9, wobei die Daten, die den Zustand des mindestens einen Umsteigegeschosses (TF) angeben, eine Belegung des mindestens einen Umsteigegeschosses (TF) beschreiben.

11. Steuersystem (160) nach einem der vorhergehenden Ansprüche 8 bis 10, wobei das Steuersystem (160) dazu konfiguriert ist, die Festlegung (230) des anderen Geschosses als das neue Umsteigegeschoss (NTF) basierend auf einem von Folgenden durchzuführen: einer vordefinierten Reihenfolge von Geschossen in dem Gebäude, einem Überwachen einer Anzahl von vordefinierten Kandidatengeschossen für das neue Umsteigegeschoss (NTF).

12. Steuersystem (160) nach Anspruch 11, wobei das Steuersystem (160) dazu konfiguriert ist, die Festlegung des anderen Geschosses als das neue Umsteigegeschoss (NTF) basierend auf dem Überwachen der Anzahl der vordefinierten Kandidatengeschosse für das neue Umsteigegeschoss (NTF) durch Folgendes durchzuführen:
Überwachen von Belegungen der vordefinierten Kandidatengeschosse, und
Auswählen des Kandidatengeschosses mit der niedrigsten Belegung unter den Kandidatengeschossen, das als das neue Umsteigegeschoss (NTF) festgelegt werden soll.

13. Steuersystem (160) nach einem der vorhergehenden Ansprüche 8 bis 12, wobei das Steuersystem (160) ferner zu Folgendem konfiguriert ist:
Empfangen einer Bestätigung, die angibt, dass dem mindestens einen Aufzug (110, 120) und dem mindestens einen anderen Aufzug (110, 120) erlaubt wird, zu dem neuen Umsteigegeschoss (NTF) zu fahren, und
Erzeugen eines Signals an das Aufzugssystem (1000), das Daten umfasst, die mindestens einen Fahrweg des mobilen Roboters (140) in dem Aufzug (110, 120) angeben, um das Aufzugssystem (1000) so zu steuern, dass es dem mobilen Roboter (140) einen Dienst in Bezug auf das neue Umsteigegeschoss (140) bereitstellt.

14. Steuersystem (160) nach einem der vorhergehenden Ansprüche 8 bis 13, wobei das Steuersystem (160) ferner zu Folgendem konfiguriert ist:
Fortfahren mit dem Erkennen, ob der Zustand des mindestens einen Umsteigegeschosses (TF) nicht dem Referenzzustand entspricht, während der mobile Roboter (140) von dem Aufzugssystem (1000) bedient wird,
Bestimmen, ob der Aufzug (110, 120), der den mobilen Roboter (140) bedient, steuerbar ist, um an dem neuen Umsteigegeschoss (NTF) anzuhalten, in Reaktion auf die Erkennung, dass der Zustand des mindestens einen Umsteigegeschosses (TF) nicht dem Referenzzustand entspricht, während der mobile Roboter (140) von dem Aufzugssystem (1000) bedient wird, und
Erzeugen eines Steuersignals an das Aufzugssystem (1000), um an dem neuen Umsteigegeschoss (NTF) anzuhalten, in Reaktion auf ein Ergebnis der Bestimmung, dass der Aufzug (110, 120), der den mobilen Roboter (140) bedient, steuerbar ist, um an dem neuen Umsteigegeschoss (NTF) anzuhalten.

15. Computerprogramm, umfassend Anweisungen, die, wenn das Programm von einem Steuersystem (160) nach Anspruch 8 ausgeführt wird, das Verfahren nach einem der Ansprüche 1 bis 7 durchführen.

16. Computerlesbares Medium, auf dem das Computerprogramm nach Anspruch 15 gespeichert ist.

## Revendications

1. Procédé pour gérer le déplacement d'un robot mobile (140) dans un bâtiment équipé d'un système d'ascenseur (1000) comprenant au moins un ascenseur conçu (110, 120) pour desservir une section du bâtiment différente de celle d'au moins un autre ascenseur (110, 120) et où l'au moins un ascenseur (110, 120) et l'au moins un autre ascenseur (110, 120) sont tous deux accessibles depuis au moins un palier de transfert (TF), le procédé, mis en œuvre par un système de commande (160), comprenant les étapes suivantes :
recevoir (210) des données représentatives d'un état de l'au moins un palier de transfert (TF),
recevoir (220) une requête de service pour fournir un service d'ascenseur au robot mobile (140),
définir (230), en réponse à la détection que l'état de l'au moins un palier de transfert (TF) ne correspond pas à un état de référence, un autre palier comme l'au moins un palier de transfert (TF) en tant que nouveau palier de transfert (NTF) pour au moins le robot mobile (140), générer (240) un signal de commande destiné au système d'ascenseur (1000) pour demander une autorisation de l'au moins un ascenseur (110, 120) et de l'au moins un autre ascenseur (110, 120) pour se déplacer vers le nouveau palier de transfert (NTF), et
générer (250) un signal de commande à l'attention du robot mobile (140), le signal de commande comprenant des données au moins indicatives d'une trajectoire de déplacement du robot mobile (140) utilisant le nouveau palier de transfert (NTF).

2. Procédé selon la revendication 1, dans lequel les données indicatives de l'état de l'au moins un palier de transfert (TF) sont reçues d'au moins l'un des éléments suivants : un système de capteur agencé pour surveiller l'au moins un palier de transfert (TF), un système d'ascenseur (1000), un système de robot, un système informatique en nuage agencé pour recevoir une entrée d'au moins un utilisateur.

3. Procédé selon l'une quelconque des revendications précédentes, dans lequel les données indicatives de l'état de l'au moins un palier de transfert (TF) sont descriptives d'une occupation de l'au moins un palier de transfert (TF).

4. Procédé selon l'une quelconque des revendications précédentes, dans lequel la définition (230) de l'autre palier en tant que nouveau palier de transfert (NTF) est effectué sur la base de l'un des éléments suivants : l'ordre prédéfini de paliers dans le bâtiment, le contrôle d'un certain nombre de paliers candidats prédéfinis pour le nouveau palier de transfert (NTF).

5. Procédé selon la revendication 4, dans lequel la définition de l'autre palier comme nouveau palier de transfert (NTF) sur la base de la surveillance du nombre de paliers candidats prédéfinis pour le nouveau palier de transfert (NTF) est réalisée par :
la surveillance des occupation des paliers candidats prédéfinis, et
la sélection du palier candidat ayant le taux d'occupation le plus bas parmi les paliers candidats à définir comme nouveau palier de transfert (NTF).

6. Procédé selon l'une quelconque des revendications précédentes, le procédé comprenant en outre les étapes suivantes :
recevoir une confirmation indiquant que l'au moins un ascenseur (110, 120) et l'au moins un autre ascenseur (110, 120) sont autorisés à se rendre au nouveau palier de transfert (NTF), et
générer, vers le système d'ascenseur (1000), un signal comprenant des données au moins indicatives d'une trajectoire de déplacement du robot mobile (140) dans l'ascenseur (110, 120) pour commander le système d'ascenseur (1000) afin de desservir le robot mobile (140) par rapport au nouveau palier de transfert (140).

7. Procédé selon l'une quelconque des revendications précédentes, comprenant les étapes suivantes
continuer à détecter si l'état de l'au moins un palier de transfert (TF) ne correspond pas à l'état de référence pendant que le robot mobile (140) est desservi par le système d'ascenseur (1000),
déterminer, en réponse à la détection que l'état de l'au moins un palier de transfert (TF) ne correspond pas à l'état de référence pendant que le robot mobile (140) est desservi par le système d'ascenseur (1000), si l'ascenseur (110, 120) desservant le robot mobile (140) peut être commandé pour s'arrêter au nouveau palier de transfert (NTF), et
générer, en réponse au résultat de la détermination stipulant que l'ascenseur (110, 120) desservant le robot mobile (140) peut être commandé pour s'arrêter au nouveau palier de transfert (NTF), un signal de commande destiné au système d'ascenseur (1000) pour s'arrêter au nouveau palier de transfert (NTF).

8. Système de commande (160) pour gérer le déplacement d'un robot mobile (140) dans un bâtiment équipé d'un système d'ascenseur (1000) comprenant au moins un ascenseur conçu (110, 120) pour desservir une section du bâtiment différente de celle d'au moins un autre ascenseur (110, 120) et où l'au moins un ascenseur (110, 120) et l'au moins un autre ascenseur (110, 120) sont tous deux accessibles depuis au moins un palier de transfert (TF), le système de commande (160) étant **caractérisé en ce qu'**il est configuré pour :
recevoir (210) des données représentatives d'un état de l'au moins un palier de transfert (TF),
recevoir (220) une requête de service pour fournir un service d'ascenseur au robot mobile (140),
définir (230), en réponse à la détection que l'état de l'au moins un palier de transfert (TF) ne correspond pas à un état de référence, un autre palier comme l'au moins un palier de transfert (TF) en tant que nouveau palier de transfert (NTF) pour au moins le robot mobile (140),
générer (240) un signal de commande destiné au système d'ascenseur (1000) pour demander une autorisation de l'au moins un ascenseur (110, 120) et de l'au moins un autre ascenseur (110, 120) pour se déplacer vers le nouveau palier de transfert (NTF), et
générer (250) un signal de commande à l'attention du robot mobile (140), le signal de commande comprenant des données au moins indicatives d'une trajectoire de déplacement du robot mobile (140) utilisant le nouveau palier de transfert (NTF).

9. Système de commande (160) selon la revendication 8, dans lequel le système de commande (160) est configuré pour recevoir les données indicatives de l'état de l'au moins un palier de transfert (TF) depuis au moins l'un des systèmes suivants : un système de capteurs agencé pour surveiller l'au moins un palier de transfert (TF), un système d'ascenseur (1000), un système robotique, un système informatique en nuage agencé pour recevoir une entrée d'au moins un utilisateur.

10. Système de commande (160) selon la revendication 8 ou la revendication 9, dans lequel les données indicatives de l'état de l'au moins un palier de transfert (TF) décrivent une occupation de l'au moins un palier de transfert (TF).

11. Système de commande (160) selon l'une quelconque des revendications précédentes 8 à 10, dans lequel le système de commande (160) est configuré pour procéder à la définition (230) de l'autre palier en tant que nouveau palier de transfert (NTF) sur la base de l'un des éléments suivants : un ordre prédéfini de paliers dans le bâtiment, le contrôle d'un nombre de paliers candidats prédéfinis pour le nouveau palier de transfert (NTF).

12. Système de commande (160) selon la revendication 11, dans lequel le système de commande (160) est configuré pour procéder à la définition de l'autre palier en tant que nouveau palier de transfert (NTF) sur la base de la surveillance du nombre de paliers candidats prédéfinis pour le nouveau palier de transfert (NTF) par :
la surveillance des occupation des paliers candidats prédéfinis, et
la sélection du palier candidat ayant le taux d'occupation le plus bas parmi les paliers candidats à définir comme nouveau palier de transfert (NTF).

13. Système de commande (160) selon l'une quelconque des revendications 8 à 12 précédentes, le système de commande (160) étant en outre configuré pour :
recevoir une confirmation indiquant que l'au moins un ascenseur (110, 120) et l'au moins un autre ascenseur (110, 120) sont autorisés à se rendre au nouveau palier de transfert (NTF), et
générer, vers le système d'ascenseur (1000), un signal comprenant des données au moins indicatives d'une trajectoire de déplacement du robot mobile (140) dans l'ascenseur (110, 120) pour commander le système d'ascenseur (1000) afin de desservir le robot mobile (140) par rapport au nouveau palier de transfert (140).

14. Système de commande (160) selon l'une quelconque des revendications 8 à 13 précédentes, le système de commande (160) étant en outre configuré pour :
continuer à détecter si l'état de l'au moins un palier de transfert (TF) ne correspond pas à l'état de référence pendant que le robot mobile (140) est desservi par le système d'ascenseur (1000),
déterminer, en réponse à la détection que l'état de l'au moins un palier de transfert (TF) ne correspond pas à l'état de référence pendant que le robot mobile (140) est desservi par le système d'ascenseur (1000), si l'ascenseur (110, 120) desservant le robot mobile (140) peut être commandé pour s'arrêter au nouveau palier de transfert (NTF), et
générer, en réponse au résultat de la détermination stipulant que l'ascenseur (110, 120) desservant le robot mobile (140) peut être commandé pour s'arrêter au nouveau palier de transfert (NTF), un signal de commande destiné au système d'ascenseur (1000) pour s'arrêter au nouveau palier de transfert (NTF).

15. Programme informatique comprenant des instructions qui, lorsque le programme est exécuté par un système de commande (160) selon la revendication 8, exécutent le procédé selon l'une quelconque des revendications 1 à 7.

16. Support lisible par ordinateur comprenant le programme informatique selon la revendication 15.
